# EUROPEAN PATENT APPLICATION

(11) **EP 2 650 493 A2**
(43) Date of publication of application: **16.10.2013**
(21) Application number: 13162672.3
(22) Date of filing: 08.04.2013
(51) Int. Cl.: F01D 25/24, F01D 25/28, F01D 21/00

(54) **Turbine shell displacement monitoring system**

(30) Priority: 12.04.2012 US 201213445541
(71) Applicant: General Electric Company, Schenectady, New York 12345 (US)
(72) Inventor: Cox, David Richard, St Petersburg, FL Florida 33701 (US)
(74) Representative: Cleary, Fidelma

(57) **Abstract**

Systems and devices adapted to monitor displacements between turbine shell portions 92,94 during shell separation processes are disclosed. In one embodiment, a system includes: a first member 110 adapted to connect to a first portion 94 of a turbine shell; a second member 120 adapted to connect to a second portion 92 of the turbine shell; and a measurement device 130 communicatively connecting the first member 110 to the second member 120 for monitoring a displacement value for a joint in the turbine shell between the first portion 94 of the turbine shell and the second portion 92 of the turbine shell.

## Description

The subject matter disclosed herein relates to machines and, more particularly, to systems for monitoring displacements between turbine shell portions during machine maintenance processes.

Some power plant systems, for example, certain nuclear, simple-cycle and combined-cycle power plant systems, employ turbines in their design and operation. These turbines include a set of shells which partially define a flowpath of the turbine and enclose a plurality of components including turbine buckets, rotors, etc. During maintenance, portions of these shells must be separated (e.g., an upper shell lifted off of a lower shell), so as to allow technicians access to turbine components. The large size of the turbine shells and the tight clearances between turbine components and shell portions may require that the lifting process be synchronized (e.g., portions of the upper shell being lifted in unison relative the lower shell), so as to avoid component contact and damage. In some power generation systems, this lifting may be performed by a team of technicians using tape measures and a plurality of jacks spaced about the turbine shell. The technicians attempt to synchronize the lift, and maintain a level relationship between the upper shell and the lower shell by calling out to one another current measurements and target increments for each jack. Based upon these called out target increments, the technicians use the jacks to lift the upper shell, monitoring progress and shell lift unison via comparison of periodic tape measure readings. However, this manual measurement and lifting process may be imprecise, time consuming and susceptible to human error.

Systems and devices adapted to monitor displacements between turbine shell portions during shell separation processes, are disclosed. In one embodiment, a system includes: a first member adapted to connect to a first portion of a turbine shell; a second member adapted to connect to a second portion of the turbine shell; and a measurement device communicatively connecting the first member to the second member for monitoring a displacement value for a joint in the turbine shell between the first portion of the turbine shell and the second portion of the turbine shell.

A first aspect of the disclosure provides a system which includes: a first member adapted to connect to a first portion of a turbine shell; a second member adapted to connect to a second portion of the turbine shell; and a measurement device communicatively connecting the first member to the second member for monitoring a displacement value for a joint in the turbine shell between the first portion of the turbine shell and the second portion of the turbine shell.

A second aspect provides a system including: a device adapted to visually represent a set of displacement values for a joint in a turbine shell between a first portion of the turbine shell and a second portion of the turbine shell; and a set of apparatuses communicatively connected to the device and adapted to obtain the set of displacement values, each of the apparatuses including: a first member adapted to connect to the first portion of the turbine shell; a second member adapted to connect to the second portion of the turbine shell; and a measurement device communicatively connecting the first member to the second member for monitoring a displacement value for the joint.

A third aspect provides a turbine including: a turbine shell including a first portion and a second portion; and a set of apparatuses adapted to monitor a set of displacement values for a joint in the turbine shell between the first portion of the turbine shell and the second portion of the turbine shell, each apparatus including: a first member adapted to connect to the first portion of the turbine shell; a second member adapted to connect to the second portion of the turbine shell; and a measurement device communicatively connecting the first member to the second member for monitoring a displacement value for the joint.

These and other features of this invention will be more readily understood from the following detailed description of the various aspects of the invention taken in conjunction with the accompanying drawings that depict various embodiments of the invention, in which:
FIG. 1 shows a schematic illustration of portions of an embodiment of a system in accordance with an aspect of the invention;
FIG. 2 shows a schematic illustration of portions of an embodiment of a system in accordance with an aspect of the invention;
FIG. 3 shows a schematic illustration of portions of an embodiment of a system in accordance with an aspect of the invention;
FIG. 4 shows a schematic illustration of portions of an embodiment of a system in accordance with an aspect of the invention;
FIG. 5 shows a schematic illustration of portions of a multi-shaft combined cycle power plant in accordance with an aspect of the invention; and
FIG. 6 shows a schematic illustration of portions of a single-shaft combined cycle power plant in accordance with an aspect of the invention.

It is noted that the drawings of the disclosure may not necessarily be to scale. The drawings are intended to depict only typical aspects of the disclosure, and therefore should not be considered as limiting the scope of the disclosure. In the drawings, like numbering represents like elements between the drawings.

As indicated herein, aspects of the invention provide for systems and devices adapted to monitor displacements between turbine shell portions during machine maintenance processes, particularly during shell separation processes. These systems include a set of members adapted to connect to an upper shell portion and a lower shell portion of a turbine. These members are communicatively connected to one another via a measuring device which is adapted to monitor (e.g., measure a vertical movement of the members and/or shell portions) a displacement/distance between the members during shell separation processes. Based on the displacement between the members, technicians may monitor/determine a set of displacement values for a joint between the upper shell and the lower shell during separation. Disposing these systems about the turbine shell during separation processes provides a comprehensive, accurate and documented record of shell displacements which may assist technicians during separation processes.

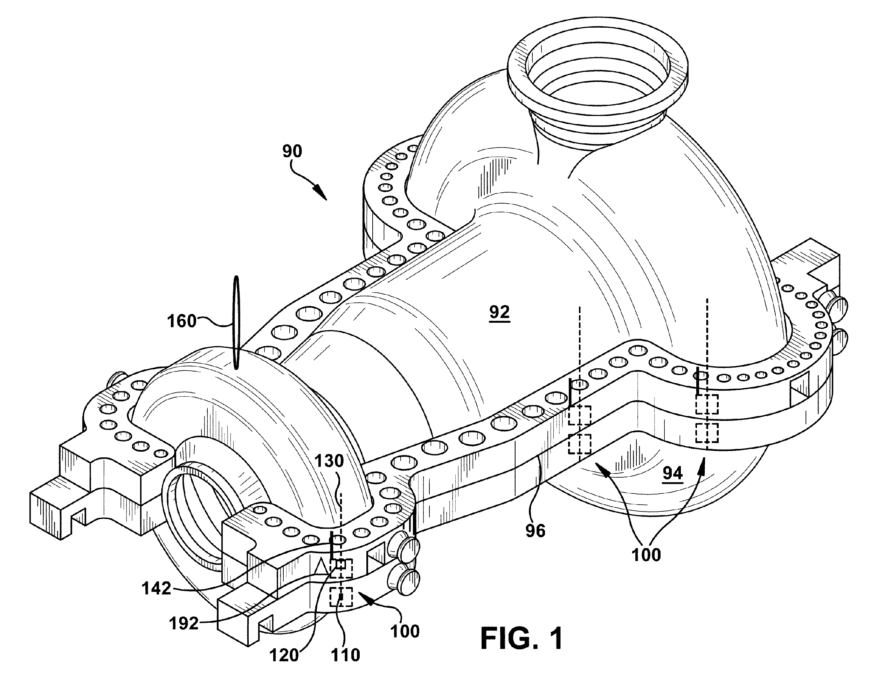

Turning to the FIGURES, embodiments of systems and devices for monitoring displacements between turbine shell portions are shown, where the systems may increase efficiency and safety in shell separation processes, by quickly and accurately identifying displacement values between turbine shell portions. Each of the components in the FIGURES may be connected via conventional means, e.g., via a wired communication, wireless communication, measurement member, magnet, bolt, or other known means as is indicated in FIGS. 1-6. Specifically, referring to FIG. 1, a schematic illustration of a system 100 connected to a turbine 90 which includes a first shell portion 94 and a second shell portion 92 is shown in accordance with aspects of the invention. System 100 may include a first member 110 connected to first shell portion 94 and a second member 120 connected to second shell portion 92. First member 110 and second member 120 may be communicatively connected to one another via a measurement device 130 which is adapted to monitor a position of first member 110 relative to second member 120. Based on the position of first member 110 relative to second member 120, a technician and/or system 100 may monitor a set of displacement values (e.g., distance between first shell portion 94 and second shell portion 92, a joint width, vertical movement of second shell portion 92, etc.), for a joint 96 between second shell portion 92 and first shell portion 94. In one embodiment, at least one of first member 110 and second member 120 may include a set of magnetic components adapted to attach to turbine 90 and thereby secure first member 110 and/or second member 120 to turbine 90. It is understood that attachment upon turbine 90 by first member 110 and second member 120 may be accomplished in any number or combination of ways as is known in the art or discussed further below.

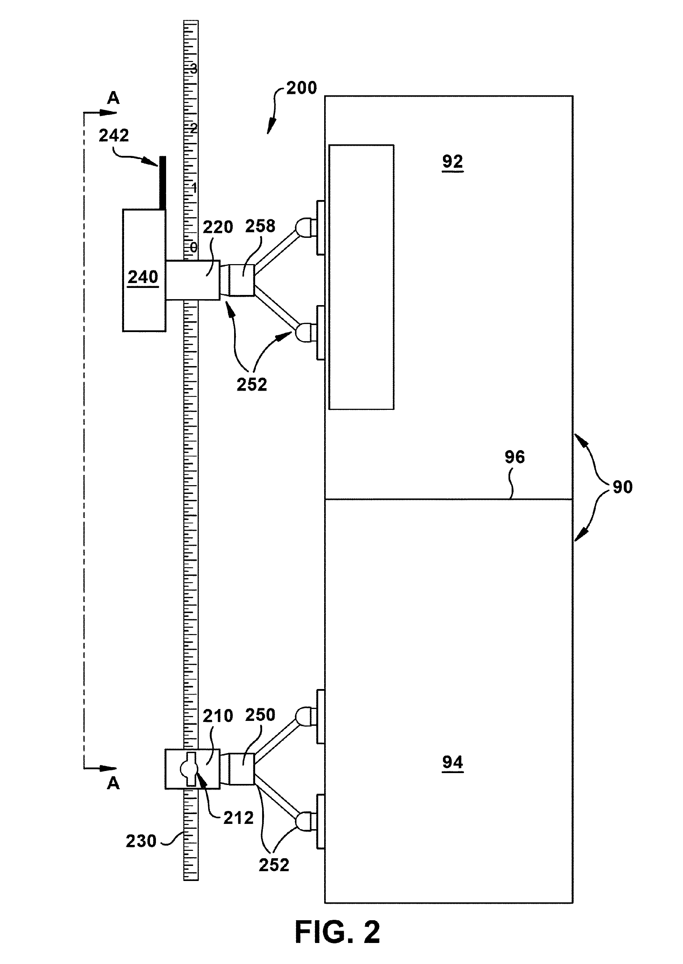

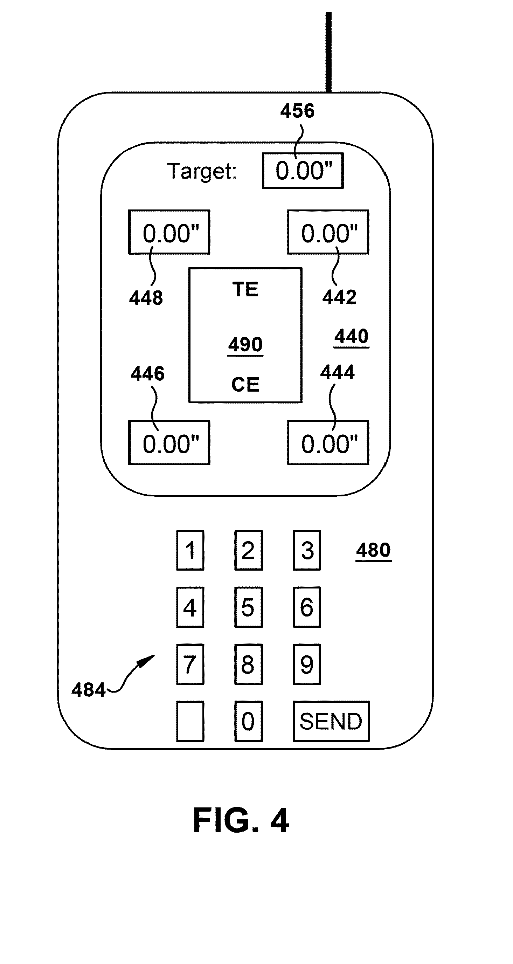

In an embodiment of the present invention, during a separation process (e.g., lifting of second shell portion 92), a technician may obtain a set of displacement values and/or monitor a distance between first shell portion 94 and second shell portion 92 by monitoring first member 110, second member 120, and/or measurement device 130. As members 110 and 120 are connected to shell portions 92 and 94, displacements in the spatial relationship between members 110 and 120 may be related and/or proportional to displacements between shell portions 92 and 94. In one embodiment, measurement device 130 may include a scale (shown in FIG. 2) readable by a technician and/or a sensor 192 to determine a distance between first member 110 and second member 120. The technician may use this reading to determine a related distance between first shell portion 94 and second shell portion 92, and/or note variances and displacements. Alternatively, system 100 may include a communications device 142 (e.g., an antennae, computing device, etc.) configured to transmit displacement values from sensor 192 to a computing device, a remote device 480 (shown in FIG. 4), and/or other systems 100 for analysis. Communications device 142 may transmit the displacement values via wireless, wireline, optical fiber cable, radio frequency or any other medium known. In one embodiment, system 100 may include a communications relay 160 adapted to assist transmission of displacement values by improving a line of sight between components and/or boosting a transmission signal.

In one embodiment, a plurality of systems 100 (shown in phantom) may be connected to turbine 90 at various locations on second shell portion 92 and first shell portion 94 to generate a comprehensive set of displacement/disturbance values for turbine 90. During a separation process plurality of systems 100 may be spread about turbine 90 such that a system 100 may be disposed at each corner of turbine 90 to monitor displacement between second shell portion 92 and first shell portion 94. In one embodiment, this plurality of systems 100 spans joint 96 obtaining a plurality of displacement values. It is understood that measurement device 130 may include a ruler, a range finder, an optical distance meter, a caliper, an ultrasonic distance meter, a radio frequency distance meter, or any other measurement device known.

Turning to FIG. 2, a schematic illustration of portions of a detail of a system 200 are shown according to embodiments of the invention. It is understood that in embodiments shown and described with reference to FIGS. 2-6, like numbering may represent like elements and that redundant explanation of these elements has been omitted for clarity. Finally, it is understood that the components of FIGS. 1-6 and their accompanying descriptions may be applied to any embodiment described herein.

Returning to FIG. 2, in this embodiment, system 200 may include a measurement member 230 (e.g., a ruler, a measuring stick, etc.) connected to a first member 210 and a second member 220. First member 210 is connected to first shell portion 94 via a first bracket 250, and second member 220 is connected to second shell portion 92 via a second bracket 258. Brackets 250 and 258 may be adapted to connect first member 210 and second member 220 to turbine 90 at a known distance and orientation relative one another (e.g., level, parallel, etc.), and/or turbine 90. A technician may adjust the distance and/or orientation of first member 210 and/or second member 220 via a set of pivots 252 in brackets 250 and 258. In one embodiment, brackets 250 and 258 may include magnetic components adapted to adjustably attach to turbine 90.

Measurement member 230 may include a scale and/or display of a set of increments (e.g., centimeters, fractions of inches, etc.) which increase in magnitude proportionate to a distance from a zero point of measurement member 230. In one embodiment, first member 210 may include a fastener 212 adapted to secure a portion of measurement member 230 to first member 210. For instance, fastener 212 may attach to a zero point (e.g., a base point, a location on measurement member 230 where the incremental value is zero), of measurement member 230. Measurement member 230 may further be communicatively connected to second member 220 so as to determine a set of displacement values. In one embodiment, measurement member 230 may be slidingly received by an aperture and/or slot in second member 220. During a separation process, measurement member 230 may be secured in place by first member 210 while second member 220 moves about (e.g., slides vertically about) measurement member 230 in response to displacement variations (e.g., lifting operations) between first shell portion 94 and second shell portion 92. Movements of second member 220 relative to measurement member 230 visually represent a set of displacement values for the separation process which may be read/recorded by a technician as second member 220 moves across the scale of measurement member 230. In one embodiment, measurement member 230 may be connected to second member 220 via a geared apparatus.

In one embodiment, second member 220 may include a base display 240 adapted to visually represent (e.g., graphically, numerically, etc.) the displacement values between first member 210 and second member 220, and/or between first shell portion 94 and second shell portion 92. In one embodiment, base display 240 may be connected to a geared apparatus which connects measurement member 230 to second member 220 and/or measurement member 230. Base display 240 is adapted to move proportionally to movements of second member 220. It is understood that first member 210 and second member 220 may be connected via a geared apparatus, a slide apparatus, or any other relative movement device. These proportional movements adjust portions of base display 240 (e.g., move elements of an analog numerical display) in response to movements of second member 220 relative measurement member 230. These adjustments to base display 240 visually represent the measured displacement values between upper shell 94 and lower shell 92 during a separation process. In one embodiment, base display 240 may include a communications device 242 adapted to communicate with a computing device, a system 100, a remote device 480 (shown in FIG. 4), and/or other devices known. It is understood that base display 240 may include an analog display, a digital display, a graphical user interface (GUI) or any other display known.

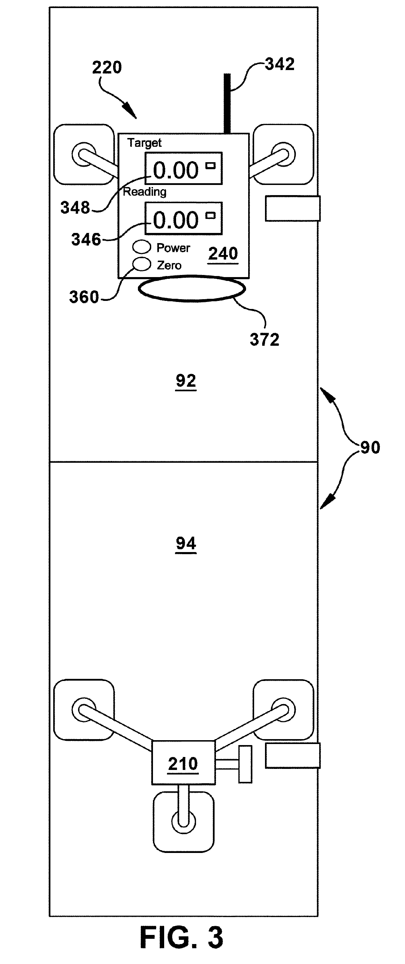

Turning to FIG. 3, a schematic illustration of portions of a detail of a system 220 are shown along line A-A of FIG. 2 according to embodiments. In this embodiment, base display 240 includes a measurement device 372 (e.g., a range finder, a laser, etc.) and is adapted to visually represent (e.g., graphically, numerically, etc.) a set of displacement values between second shell portion 92 and first shell portion 94. Measurement device 372 may monitor a position of first member 210 relative to a position of second member 220; and, based on the position of first member 210 relative to second member 220, base display 240 may generate a set of displacement values. In one embodiment, base display 240 may show a graphical representation (e.g., a graph, a light indicator, color-code, etc.), of the displacement values. In another embodiment, base display 240 may show a numerical representation of the displacement values. In one embodiment, base display 240 may further color-code this numerical representation of the displacement values (e.g., red for a large displacement value variance from another communicatively connected system, green for a target displacement value, etc.). In any event, base display 240 may include an actual displacement field 346 adapted to display the current displacement value between second shell portion 92 and first shell portion 94. In one embodiment, base display 240 may include a zero button 360 adapted to zero actual displacement field 346 such that all displacement values will be based on a current orientation and/or spacing of first member 210 and second member 220 (e.g., allowance for starting displacement between first member 210 and second member 220 upon affixment to turbine 90). Additionally, base display 240 may include a target displacement field 348 adapted to display a target displacement value between second shell portion 92 and first shell portion 94. The target displacement value represents a desired change (e.g., how far a technician is to lift and/or lower a shell portion), to the displacement between second shell portion 92 and first shell portion 94. This target displacement value may be determined by base display 240, input by a technician, and/or transmitted to base display 240 from remote device 480 (shown in FIG. 4) via a communications device 342. In some embodiments, base display 240 may be used in combination with measurement member 230 of FIG. 3, providing redundancy to technicians who may read/record displacement values from both base display 240 and/or measurement member 230.

Turning to FIG. 4, a schematic illustration of a remote device 480 is shown according to embodiments of the invention. Remote device 480 may communicatively connect to communications device 242 (FIG. 2) to obtain a set of displacement values to visually represent on a remote display 440 for a supervisor and/or technician. In this embodiment, remote display 440 includes a set of displacement fields 442, 444, 446, and 448, oriented about a turbine icon 490. Displacement fields 442, 444, 446, and 448, may represent a plurality of systems 100 disposed about turbine 90 which is represented by turbine icon 490. Each displacement field 442, 444, 446, and 448, may be communicatively connected to a specific system 100 in the plurality of systems 100. These displacement fields 442, 444, 446, and 448, may thereby each display the real-time displacement value for a specific system in the plurality of systems 100. In one embodiment, displacement fields 442, 444, 446, and 448, may be oriented about turbine icon 490 so as to represent an actual location of plurality of systems 100 relative turbine 90 (e.g., left side, right side, turbine end (TE), collector end (CE), etc.). Remote display 440 may be adapted to visually represent a current displacement of each system in plurality of systems 100 via displacement fields 442, 444, 446, and 448. Additionally, remote display 440 may include a target displacement field 456 which displays the target displacement between first shell portion 94 and second shell portion 92. This target displacement may be a final desired displacement or an incremental displacement which is part of the separation process.

Remote device 480 may further include an interface 484 adapted to enable two way communication with plurality of systems 100. In one embodiment, a supervisor and/or technician may input a target displacement value via interface 484 and transmit the target displacement value to plurality of systems 100 for display on base display 240. In one embodiment, a supervisor may transmit a target displacement value to a single system 100 in plurality of systems 100. Interface 484 may include a numerical keypad, a pair of incremental input devices (e.g., an up arrow and a down arrow), or any other input/output device known. Further, remote display 440 may be an analog display, a digital display, a graphical user interface (GUI) or any other display known.

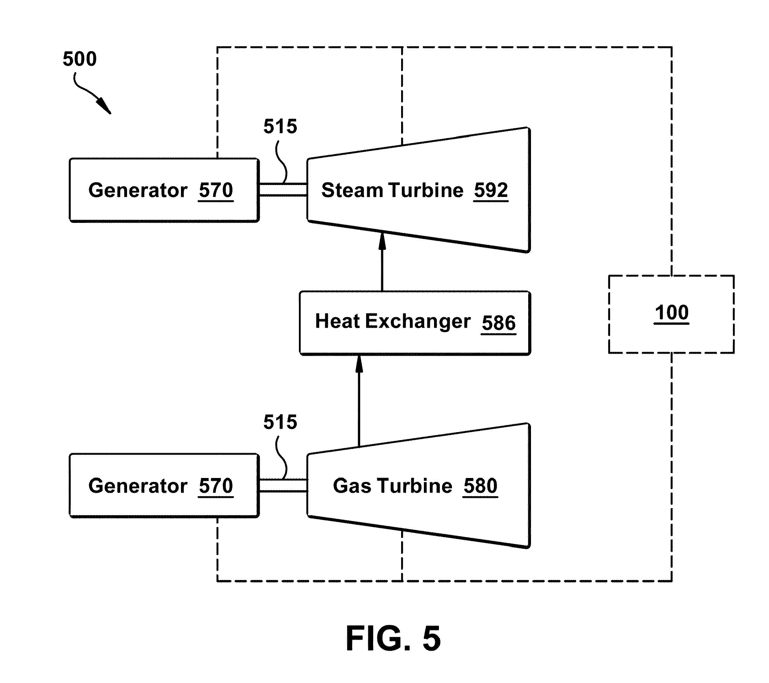

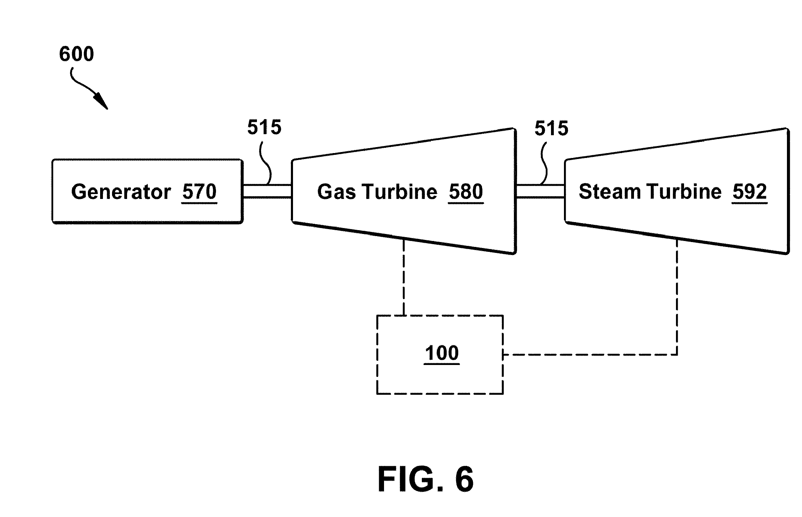

Turning to FIG. 5, a schematic view of portions of a multi-shaft combined-cycle power plant 900 is shown. Combined-cycle power plant 900 may include, for example, a gas turbine 942 operably connected to a generator 944. Generator 944 and gas turbine 942 may be mechanically coupled by a shaft 911, which may transfer energy between a drive shaft (not shown) of gas turbine 942 and generator 944. Gas turbine 942 may be connected to system 100 of FIG. 1 or other embodiments described herein. Also shown in FIG. 5 is a heat exchanger 946 operably connected to gas turbine 942 and a steam turbine 948. Heat exchanger 946 may be fluidly connected to both gas turbine 942 and steam turbine 948 via conventional conduits (numbering omitted). Heat exchanger 946 may be a conventional heat recovery steam generator (HRSG), such as those used in conventional combined-cycle power systems. As is known in the art of power generation, HRSG 946 may use hot exhaust from gas turbine 942, combined with a water supply, to create steam which is fed to steam turbine 948. Steam turbine 948 may optionally be coupled to a second generator system 944 (via a second shaft 911). It is understood that generators 944 and shafts 911 may be of any size or type known in the art and may differ depending upon their application or the system to which they are connected. Common numbering of the generators and shafts is for clarity and does not necessarily suggest these generators or shafts are identical. Generator system 944 and second shaft 911 may operate substantially similarly to generator system 944 and shaft 911 described above. Steam turbine 948 may be connected to system 100 of FIG. 1 or other embodiments described herein. In one embodiment of the present invention (shown in phantom), system 100 may be used to monitor processes in either or both of steam turbine 948 and gas turbine 942. In another embodiment, two systems 100 may be operably connected to combined-cycle power plant 900, one system 100 for each of gas turbine 942 and steam turbine 946. In another embodiment, shown in FIG. 6, a single-shaft combined-cycle power plant 990 may include a single generator 944 coupled to both gas turbine 942 and steam turbine 946 via a single shaft 911. Gas turbine 942 and steam turbine 946 may be connected to system 100 of FIG. 1 or other embodiments described herein.

The system of the present disclosure is not limited to any one particular machine, driven machine, turbine, fan, blower, compressor, power generation system or other system, and may be used with other power generation systems and/or systems (e.g., combined-cycle, simple-cycle, nuclear reactor, etc.). Additionally, the system of the present invention may be used with other systems not described herein that may benefit from the monitoring, recording, and measurement capabilities of the system described herein.

The terminology used herein is for the purpose of describing particular embodiments only and is not intended to be limiting of the disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

Various aspects and embodiments of the present invention are defined by the following numbered clauses:
1. A system comprising:
   a first member adapted to connect to a first portion of a turbine shell;
   a second member adapted to connect to a second portion of the turbine shell; and
   a measurement device communicatively connecting the first member to the second member for monitoring a displacement value for a joint in the turbine shell between the first portion of the turbine shell and the second portion of the turbine shell.
2. The system of clause 1, wherein the measurement device includes a measurement member communicatively connected to the first member and connected to the second member, the measurement member including a display of incremental lengths.
3. The system of clause 1 or clause 2, wherein at least one of the first member and the second member include a magnetic component adapted to affix to the turbine shell.
4. The system of any preceding clause, wherein at least one of the first member and the second member are adapted to connect to the turbine shell via an adjustable bracket.
5. The system of any preceding clause, further comprising a base display connected to at least one of the first member and the second member, the base display adapted to visually represent the displacement value.
6. The system of any preceding clause, wherein the base display visually represents at least one of a target displacement value and a current displacement value.
7. The system of any preceding clause, further comprising:
   a communication device adapted to transmit a set of displacement values; and
   a remote device communicatively connected to the communication device, the remote device adapted to obtain and visually represent the set of displacement values.
8. The system of any preceding clause, wherein the remote device is adapted to transmit a target displacement value to a base display connected to the first member, the base display adapted to visually represent the target displacement value.
9. The system of any preceding clause, wherein the displacement value includes a set of displacement values.
10. A system comprising:
   a device adapted to visually represent a set of displacement values for a joint in a turbine shell between a first portion of the turbine shell and a second portion of the turbine shell; and
   a set of apparatuses communicatively connected to the device and adapted to obtain the set of displacement values, each of the apparatuses including:
      a first member adapted to connect to the first portion of the turbine shell;
      a second member adapted to connect to the second portion of the turbine shell; and
      a measurement device communicatively connecting the first member to the second member for monitoring a displacement value for the joint.
11. The system of any preceding clause, wherein the measurement device includes a measurement member connected to the first member and the second member, the measurement member including a display of incremental lengths.
12. The system of any preceding clause, wherein at least one of the first member and the second member include a magnetic component adapted to affix to the turbine shell.
13. The system of any preceding clause, wherein at least one of the first member and the second member are adapted to connect to the turbine shell via an adjustable bracket.
14. The system of any preceding clause, further comprising a base display connected to one of the first member and the second member, the base display adapted to visually represent the set of displacement values.
15. The system of any preceding clause, wherein the base display visually represents at least one of a target displacement value and a current displacement value.
16. The system of any preceding clause, wherein the device is adapted to transmit a target displacement value to a base display connected to the first member, the base display adapted to visually represent the target displacement value.
17. A turbine, comprising:
   a turbine shell including a first portion and a second portion; and
   a set of apparatuses adapted to monitor a set of displacement values for a joint in the turbine shell between the first portion of the turbine shell and the second portion of the turbine shell, each apparatus including:
      a first member adapted to connect to the first portion of the turbine shell;
      a second member adapted to connect to the second portion of the turbine shell; and
      a measurement device communicatively connecting the first member to the second member for monitoring a displacement value for the joint.
18. The turbine of any preceding clause, wherein the measurement device includes a measurement member connected to the first member and the second member, the measurement member including a display of incremental lengths.
19. The turbine of any preceding clause, further comprising a base display connected to one of the first member and the second member, the base display adapted to visually represent the set of displacement values.
20. The turbine of any preceding clause, further comprising:
   a communication device connected to at least one of the first member and the second member, the communication device adapted to transmit the set of displacement values; and
   a remote device communicatively connected to the communication device, the remote device adapted to obtain and visually represent the set of displacement values.

## Claims

1. A system comprising:
a first member (110) adapted to connect to a first portion (94) of a turbine shell;
a second member (120) adapted to connect to a second portion (92) of the turbine shell; and
a measurement device (130) communicatively connecting the first member (110) to the second member for monitoring a displacement value for a joint in the turbine shell between the first portion of the turbine shell and the second portion of the turbine shell.

2. The system of claim 1, wherein the measurement device includes a measurement member communicatively connected to the first member and connected to the second member, the measurement member including a display of incremental lengths.

3. The system of claim 1 or claim 2, wherein at least one of the first member and the second member include a magnetic component adapted to affix to the turbine shell.

4. The system of any preceding claim, wherein at least one of the first member and the second member are adapted to connect to the turbine shell via an adjustable bracket.

5. The system of any preceding claim, further comprising a base display connected to at least one of the first member and the second member, the base display adapted to visually represent the displacement value.

6. The system of any preceding claim, wherein the base display visually represents at least one of a target displacement value and a current displacement value.

7. The system of any preceding claim, further comprising:
a communication device adapted to transmit a set of displacement values; and
a remote device communicatively connected to the communication device, the remote device adapted to obtain and visually represent the set of displacement values.

8. The system of any preceding claim, wherein the remote device is adapted to transmit a target displacement value to a base display connected to the first member, the base display adapted to visually represent the target displacement value.

9. The system of any preceding claim, wherein the displacement value includes a set of displacement values.

10. A system comprising:
a device adapted to visually represent a set of displacement values for a joint in a turbine shell between a first portion of the turbine shell and a second portion of the turbine shell; and
a set of systems according to any one of the preceding claims communicatively connected to the device and adapted to obtain the set of displacement values.

11. A turbine comprising:
a turbine shell including a first portion and a second portion; and
a set of systems according to any one of claims 1 to 9 adapted to monitor a set of displacement values for a joint in the turbine shell between the first portion of the turbine shell and the second portion of the turbine shell.

12. A system comprising:
a device adapted to visually represent a set of displacement values for a joint in a turbine shell between a first portion of the turbine shell and a second portion of the turbine shell; and
a set of apparatuses communicatively connected to the device and adapted to obtain the set of displacement values, each of the apparatuses including:
a first member adapted to connect to the first portion of the turbine shell;
a second member adapted to connect to the second portion of the turbine shell;
and
a measurement device communicatively connecting the first member to the second member for monitoring a displacement value for the joint.

13. A turbine, comprising:
a turbine shell including a first portion and a second portion; and
a set of apparatuses adapted to monitor a set of displacement values for a joint in the turbine shell between the first portion of the turbine shell and the second portion of the turbine shell, each apparatus including:
a first member adapted to connect to the first portion of the turbine shell;
a second member adapted to connect to the second portion of the turbine shell; and
a measurement device communicatively connecting the first member to the second member for monitoring a displacement value for the joint.

14. The turbine of claim 13, wherein the measurement device includes a measurement member connected to the first member and the second member, the measurement member including a display of incremental lengths.

15. The turbine of claim 13 or claim 14, further comprising a base display connected to one of the first member and the second member, the base display adapted to visually represent the set of displacement values.
